(19) **Europäisches Patentamt**
**European Patent Office**
**Office européen des brevets**

(11) **EP 3 836 662 A1**

(12) **EUROPEAN PATENT APPLICATION**
published in accordance with Art. 153(4) EPC

(43) Date of publication:
**16.06.2021 Bulletin 2021/24**

(51) Int Cl.:
**H04W 72/04** (2009.01)

(21) Application number: **18929178.4**

(86) International application number:
**PCT/JP2018/030147**

(22) Date of filing: **10.08.2018**

(87) International publication number:
**WO 2020/031385 (13.02.2020 Gazette 2020/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **NTT DOCOMO, INC.**
**Chiyoda-ku**
**Tokyo 100-6150 (JP)**

(72) Inventors:
• **MATSUMURA, Yuki**
**Tokyo 100-6150 (JP)**

• **TAKEDA, Kazuki**
**Tokyo 100-6150 (JP)**
• **NAGATA, Satoshi**
**Tokyo 100-6150 (JP)**
• **WANG, Lihui**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(54) **USER TERMINAL AND WIRELESS COMMUNICATION METHOD**

(57) To appropriately perform communication even when configured grant-based UL transmission is configured, a user terminal according to an aspect of the present disclosure includes: a transmitting section that transmits a first demodulation reference signal (DMRS) for demodulating a first uplink shared channel scheduled by downlink control information and a second DMRS for demodulating a second uplink shared channel that is not scheduled by the downlink control information; and a control section that controls generation of a sequence of the first DMRS and a sequence of the second DMRS based on higher layer parameters configured separately.

FIG. 1

**Description**

Technical Field

The present disclosure relates to a user terminal and a radio communication method in next-generation mobile communication systems.

Background Art

In the UMTS (Universal Mobile Telecommunications System) network, the specifications of long term evolution (LTE) have been drafted for the purpose of further increasing high speed data rates, providing lower delays and the like (see Non-Patent Literature 1). In addition, the specifications of LTE-A (LTE Advanced, also referred to as LTE Rel. 10, 11, or 12) have been drafted for the purpose of further widening bandwidth and speeding up from LTE (also referred to as LTE Rel. 8 or 9). LTE successor systems (also referred to as, for example, FRA (Future Radio Access), 5G (5th generation mobile communication system), 5G+ (plus), new radio (NR), new radio access (NX), future generation radio access (FX), LTE Rel. 13, 14, or 15 or later) are also under study.

In existing LTE systems (for example, LTE Rel. 8-13), the uplink signal is mapped to the appropriate radio resource and transmitted from the UE to the eNB. Uplink user data is transmitted using an uplink shared channel (Physical Uplink Shared Channel (PUSCH)). Uplink control information (UCI) is transmitted using PUSCH when transmitted together with uplink user data, and using an uplink control channel (Physical Uplink Control Channel (PUCCH)) when transmitted alone.

In existing LTE systems, for transmitting an uplink shared channel (PUSCH), a demodulation reference signal (DMRS) of the channel is transmitted.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

Summary of Invention

Technical Problem

In future radio communication systems (for example, NR), dynamic grant-based transmission and configured grant-based transmission are being studied for UL transmission.

However, when different types of PUSCH transmission are introduced, the problem is how to control the DMRS (for example, sequence generation) used for demodulation of the PUSCH. If DMRS generation cannot be appropriately controlled when introducing the configured grant-based PUSCH, the communication quality may deteriorate.

Therefore, an object of the present disclosure is to provide a user terminal and a wireless communication method capable of appropriately performing communication even when configured grant-based UL transmission is configured.

Solution to Problem

A user terminal according to an aspect of the present disclosure includes: a transmitting section that transmits a first demodulation reference signal (DMRS) for demodulating a first uplink shared channel scheduled by downlink control information and a second DMRS for demodulating a second uplink shared channel that is not scheduled by the downlink control information; and a control section that controls generation of a sequence of the first DMRS and a sequence of the second DMRS based on higher layer parameters configured separately.

Advantageous Effects of Invention

According to an aspect of the present disclosure, communication can be appropriately performed even when configured grant-based UL transmission is configured.

Brief Description of Drawings

Fig. 1 is a diagram showing an example of DMRS sequence generation for dynamic grant-based and configured grant-based PUSCHs.
Fig. 2 is a diagram showing another example of DMRS sequence generation for dynamic grant-based and configured grant-based PUSCHs.
Fig. 3 is a diagram showing another example of DMRS sequence generation for dynamic grant-based and configured grant-based PUSCHs.
Fig. 4 is a diagram showing an example of a schematic structure of a radio communication system according to one embodiment.
Fig. 5 is a diagram showing an example of an overall configuration of a base station according to one embodiment.
Fig. 6 is a diagram showing an example of a functional configuration of the base station according to one embodiment.
Fig. 7 is a diagram showing an example of an overall structure of a user terminal according to one embodiment.
Fig. 8 is a diagram showing an example of a functional structure of a user terminal according to one embodiment.
Fig. 9 is a diagram showing an example of a hardware structure of the base station and the user terminal according to one embodiment.

Description of Embodiments

<Dynamic grant-based transmission and configured grant-based transmission (type 1, type 2)>

Dynamic grant-based transmission and configured grant-based transmission are being studied for UL transmission of NR.
Dynamic grant-based transmission is a method of performing UL transmission using an uplink shared channel (for example, (Physical Uplink Shared Channel (PUSCH)) on the basis of a dynamic UL grant (dynamic grant).
The configured grant-based transmission is a method of performing UL transmission using an uplink shared channel (for example, PUSCH) on the basis of the UL grant configured by the higher layer (for example, configured grant, may be referred to as configured UL grant or the like). In the configured grant-based transmission, UL resources are already assigned to the UE, and the UE can voluntarily perform UL transmission using the configured resources, and thus low delay communication can be expected to be realized.
Dynamic grant-based transmission may be referred to as dynamic grant-based PUSCH, UL transmission with dynamic grant, PUSCH with dynamic grant, UL Transmission with UL grant, UL grant-based transmission, UL transmission scheduled (of which transmission resource is configured) by dynamic grant, or the like.
The configured grant-based transmission may be referred to as configured grant-based PUSCH, UL transmission with configured grant, PUSCH with configured grant, UL Transmission without UL grant, UL grant-free transmission, UL transmission scheduled (of which transmission resource is configured) by configured grant, or the like.
Furthermore, the configured grant-based transmission may be defined as one type of UL Semi-Persistent Scheduling (SPS). In the present disclosure, "configured grant" may be read as "SPS", "SPS/configured grant", and the like.
Several types (type 1, type 2, or the like) are being studied for configured grant-based transmission.
In configured grant type 1 transmission, the parameters used for configured grant-based transmission (which may also be referred to as configured grant-based transmission parameters, configured grant parameters, or the like) are configured in the UE using only higher layer signaling.
In configured grant type 2 transmission, configured grant parameters are configured in the UE by higher layer signaling. In the configured grant type 2 transmission, notification of at least a part of the configured grant parameters may be provided to the UE by physical layer signaling (for example, activation downlink control information (DCI) described later).
Here, the higher layer signaling may be, for example, any of RRC (Radio Resource Control) signaling, MAC (Medium Access Control) signaling, broadcast information, and the like, or a combination thereof.
For the MAC signaling, for example, a MAC control element (MAC CE), a MAC PDU (Protocol Data Unit), or the like may be used. The broadcast information may be, for example, a master information block (MIB), a system information block (SIB), a minimum system information (Remaining Minimum System Information (RMSI)), other system information (OSI), or the like.
The configured grant parameter may be configured in the UE using a ConfiguredGrantConfig information element of RRC. The configured grant parameter may include information specifying the configured grant resource, for example. The configured grant parameter may include information on, for example, an index of the configured grant, a time offset, periodicity, the number of repeated transmissions of a transport block (TB) (the number of repeated transmissions may be expressed as K), a redundancy version (RV) sequence used in the repeated transmissions, the above-mentioned timer, and the like.

Here, each of the periodicity and the time offset may be represented in units of symbols, slots, subframes, frames, or the like. The periodicity may be indicated by, for example, a given number of symbols. The time offset may be indicated by an offset with respect to the timing of a given index (slot number = 0 and/or system frame number = 0, for example). The number of repeated transmissions may be an arbitrary integer, for example, 1, 2, 4, 8, or the like. When the number of repeated transmissions is n (>0), the UE may perform configured grant-based PUSCH transmission of a given TB by using n times of transmission occasions.

The UE may determine that one or more configured grants have been triggered if the configured grant type 1 transmission is set. The UE may perform PUSCH transmission by using the configured resource for configured grant-based transmission (which may be referred to as a configured grant resource, a transmission occasion, or the like). Note that, even when the configured grant-based transmission is configured, the UE may skip the configured grant-based transmission when there is no data in the transmission buffer.

When the configured grant type 2 transmission is configured and notification of a given activation signal is provided, the UE may determine that one or a plurality of configured grants have been triggered (or activated). The given activation signal (activation DCI) may be a DCI (PDCCH) scrambled by a Cyclic Redundancy Check (CRC) with a given identifier (for example, Configured Scheduling RNTI (CS-RNTI)). Note that the DCI may be used for control such as deactivation and retransmission of the configured grant.

The UE may determine whether to perform PUSCH transmission using the configured grant resource configured in the higher layer on the basis of the given activation signal. The UE may release (which may be referred to as deactivate or the like) the resource (PUSCH) corresponding to the configured grant on the basis of the expiration (elapse of a given time) of the DCI that deactivates the configured grant or a given timer.

Note that, even when the configured grant-based transmission is activated (in an active state), the UE may skip the configured grant-based transmission when there is no data in the transmission buffer.

Note that each of the dynamic grant and the configured grant may be referred to as an actual UL grant. That is, the actual UL grant may be higher layer signaling (for example, ConfiguredGrantConfig information element of RRC), physical layer signaling (for example, the above-described given activation signal), or a combination thereof.

<Data mapping type>

Different resource allocation types (for example, type A and type B) are supported for allocation of data transmitted by dynamic grant (for example, physical shared channels). For example, there are PUSCH mapping type A and PUSCH mapping type B as mapping types applied to the uplink shared channel (PUSCH).

In the PUSCH mapping type A, the PUSCH starting position in a slot is selected from a preset fixed symbols (for example, symbol index #0), and the number of symbols to which the PUSCH is allocated (a PUSCH length) is selected from the range from a given value (Y) to 14.

In PUSCH mapping type A, the starting position of PUSCH is fixed, but the PUSCH length (here, L = 4) is configured flexibly. In PUSCH mapping type A, at least one of the DMRSs used to demodulate PUSCH may be located on a fixed symbol (for example, symbol # 0). In the PUSCH mapping type A, since PUSCH starts from a fixed position, the position of at least one DMRS may also be determined based on the starting position of the PUSCH.

In the PUSCH mapping type B, the number of symbols to which the PUSCH is allocated (a PUSCH length) is selected from the preset number of candidate symbols (1 to 14 symbols), and the PUSCH starting position in a slot is configured to any location (symbol) in the slot.

In PUSCH mapping type B, a base station reports the PUSCH start symbol (S) and the number of consecutive symbols (L) from the start symbol to a UE. The number of consecutive symbols (L) from the start symbol is also referred to as a PUSCH length. In PUSCH mapping type B, the PUSCH starting position is set flexibly. In the PUSCH mapping type B, at least one of DMRS used for demodulation of PUSCH may be configured to be configured based on the allocation position of PUSCH in the slot. DMRS may be inserted at different positions depending on the mapping type.

As described above, NR supports different types of PUSCH transmission. However, the problem is how to control the DMRS (for example, sequence generation or parameters) used to demodulate the dynamic grant-based PUSCH and the configured grant-based PUSCH.

It is also conceivable that the DMRS for the newly introduced configured grant-based PUSCH is generated using the same (same parameters) as the DMRS for the dynamic grant-based PUSCH. However, in the dynamic grant-based PUSCH, a plurality of (for example, two) mapping types are configured, and the DMRS configuration may differ for each mapping type. In such a case, the DMRS for the setting grant-based PUSCH may not be generated appropriately.

Therefore, the present inventors have thought of controlling generation of a DMRS for dynamic grant-based PUSCH and a DMRS for configured grant-based PUSCH (for example, generation of sequence) based on separately configured higher layer parameters.

Hereinafter, embodiments according to the present disclosure will be described in detail with reference to the drawings. The radio communication method according to each of the embodiments may be applied independently, or may be applied in combination with others.

(DMRS sequence generation)

The UE may control generation of a sequence of DMRSs for dynamic grant-based PUSCHs and DMRSs for configured grant-based PUSCHs based on higher layer parameters configured separately. The dynamic grant-based PUSCH may be a DCI-scheduled PUSCH. The configured grant-based PUSCH may be a PUSCH that is not scheduled by a DCI.

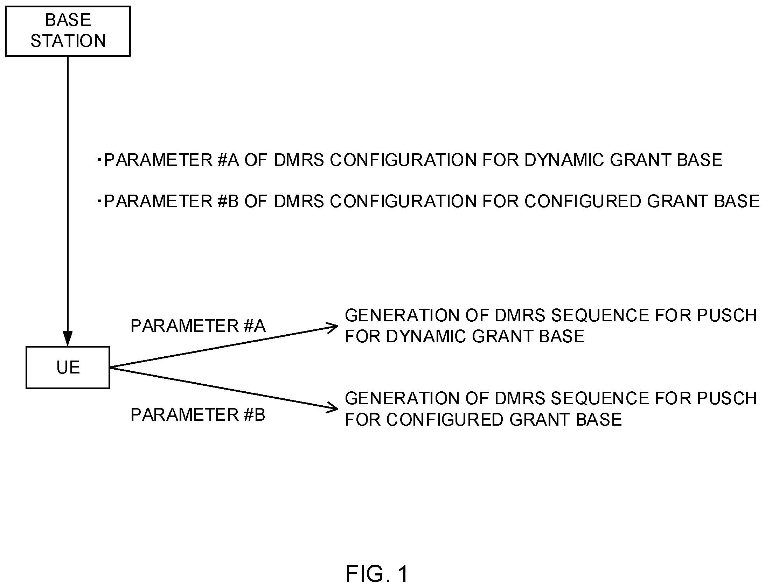

For example, when performing dynamic grant-based PUSCH transmission, the UE generates a DMRS based on the higher layer parameter #A reported from the base station (see Fig. 1). When performing configured grant-based PUSCH transmission, the UE generates a DMRS based on the higher layer parameter #B reported from the base station.

The first higher layer parameter may be a higher layer parameter (for example, scramblingID, or nPUSCH-Identity) configured in a first information element (for example, DMRS-UplinkConfig IE). The second higher layer parameter may be a higher layer parameter (for example, scramblingID, or nPUSCH-Identity) configured in a second information element (for example, cg-DMRS-configuration IE) that is different from the first information element.

As described above, the DMRS may be generated by configuring higher layer parameters configured separately for different information elements, for the DMRS for the dynamic grant-based PUSCH and the DMRS for the setting grant-based PUSCH. This allows the UE to appropriately generate a sequence of DMRSs for dynamic grant-based PUSCHs and DMRSs for configured grant-based PUSCHs.

In the present embodiment, control can be performed by using different waveforms for UL transmission. The generation of a DMRS when different waveforms (transform precoding is enabled/disabled) are applied will be described below.

<Transform precoding>

It is assumed that, in NR, for UL transmission (for example, PUSCH transmission), discrete Fourier transform-spread-orthogonal frequency division multiplexing (DFT-s-OFDM) waveform, which is a single carrier waveform, and cyclic prefix-orthogonal frequency division multiplexing (CP-OFDM) waveform, which is a multicarrier waveform, are supported.

The DFT-s-OFDM waveform may be paraphrased as a UL signal applied with DFT-spreading (also referred to as DFT precoding or the like), and the CP-OFDM waveform may be paraphrased as a UL signal without DFT-spreading).

Since the DFT-s-OFDM waveform (hereinafter, also referred to as a first waveform) is a single carrier waveform, it is possible to prevent an increase in the peak to average power ratio (PAPR). When the DFT-s-OFDM waveform is applied, the allocation of uplink data (PUSCH) is limited to continuous physical resource blocks (PRB).

It is assumed that, for the UL transmission (for example PUSCH), whether DFT-spreading is applied (DFT-s-OFDM waveform (hereinafter, also referred to as the first waveform) or CP-OFDM waveform (hereinafter, also referred to as the second waveform)) is configured or indicated to the user terminal from the network (for example, radio base station).

For example, the radio base station uses higher layer signaling and/or downlink control information to configure whether or not to apply the first waveform, in the user terminal. Waveform configuration are also referred to as transform-precoding, and when transform-precoding is "enabled", the first waveform (DFT-s-OFDM waveform) is applied to transmit the PUSCH. On the other hand, when the transform-precoding is "disabled", in the UE, the PUSCH is transmitted without the first waveform (for example, the CP-OFDM waveform is applied).

The method of generating a sequence of reference signals (for example, DMRSs) is defined differently when transform precoding for PUSCH is enabled or configured and when transform precoding is disabled or not configured.

For example, when transform precoding is enabled, the sequence of DMRSs (also referred to as r(n), for example) may be defined using the sequence group (u), sequence number (v), and the like. The sequence group (u) may be defined based on $f_{gh}$ or the like corresponding to group hopping (or a parameter of group hopping). Further, the application of group hopping and sequence hopping are supported.

On the other hand, when transform precoding is disabled, the sequence of DMRSs (also referred to as r(n), for example) is defined on the basis of a pseudo-random sequence and an initial value ($c_{init}$) of the pseudo-random sequence, without using the sequence group (u) and the sequence number (v).

The UE may generate sequences to be applied to the DMRS in different ways, depending on whether transform precoding is enabled (when applied) and disabled (when not applied). The sequence of DMRSs when transform precoding is disabled and enabled will be described below.

<When transform precoding is disabled>

It is assumed that transform precoding is set to disabled (not enabled, for example, PUSCH transmission based on CP-OFDM is performed). When transform precoding is disabled, the UE may generate the sequence applied to the DMRS by Formula (1) below.
[Equation 1]

Formula (1)

$$r(n) = \frac{1}{\sqrt{2}}\left(1 - 2 \cdot c(2n)\right) + j\frac{1}{\sqrt{2}}\left(1 - 2 \cdot c(2n+1)\right)$$

c(i): Pseudo-random sequence function
j: Imaginary number

**[0054]** In this case, since a parameter 1 related to the symbol is included as a parameter included in determination of the initial value, the sequence is generated at the symbol level. The initial value ($c_{init}$) of the pseudo-random sequence of Formula (1) may be defined by Formula (2) below.
[Equation 2]

Formula (2)

$$c_{init} = \left(2^{17}\left(N_{symb}^{slot} n_{s,f}^{\mu} + l + 1\right)\left(2N_{ID}^{n_{SCID}} + 1\right) + 2N_{ID}^{n_{SCID}} + n_{SCID}\right) \bmod 2^{31}$$

$N_{symb}^{slot}$ : Number of symbols for each slot

$n_{s,f}^{\mu}$ : Slot number

1: Symbol number in slot

$n_{SCID}$: Value specified with 0 or 1 (for example, $n_{SCID} \in \{0,1\}$)

$N_{ID}^{n\_SCID}$: Value reported by higher layer (for example,

$N_{ID}^{n_{SCID}} \in \{0,1,...,65535\}$ )

In Formula (2), the UE may acquire a value of $N_{ID}^0$ ($n_{SCID}$ = 0) and $N_{ID}^1$ ($n_{SCID}$ = 1) on the basis of the upper layer parameters (for example, scramblingIDO and scramblingID1) reported from the base station by higher layer signaling (for example, RRC signaling). The higher layer parameter may be configured separately for dynamic grant base and setting grant base and reported to the UE.

For example, if the PUSCH is a dynamic grant-based PUSCH scheduled by the PDCCH (or DCI), the UE acquire $N_{ID}^0$ and $N_{ID}^1$ on the basis of higher parameters (for example, scramblingIDO and scramblingID1) configured in the first information element (for example, DMRS-UplinkConfig IE). The dynamic grant-based PUSCH scheduled by the PDSCH may be a PUSCH scheduled by the PDCCH using a DCI format to be CRC scrambled in C-RNTI (for example, DCI format 1_0 or DCI format 0_0) in C-RNTI.

On the other hand, if the PUSCH is a configured grant-based PUSCH not scheduled by the PDCCH (or DCI), the UE acquire $N_{ID}^0$ and $N_{ID}^1$ on the basis of higher parameters (for example, scramblingIDO and scramblingID1) configured in the second information element (for example, cg-DMRS-configuration IE). For the configured PUSCH in which PUSCH is not scheduled by the PDCCH, UL transmission may be performed without grant.

The value of $n_{SCID}$ (0 or 1) may be reported from the base station to the UE. The UE may assume $n_{SCID}$ = 0 if the base station does not report the $n_{SCID}$.

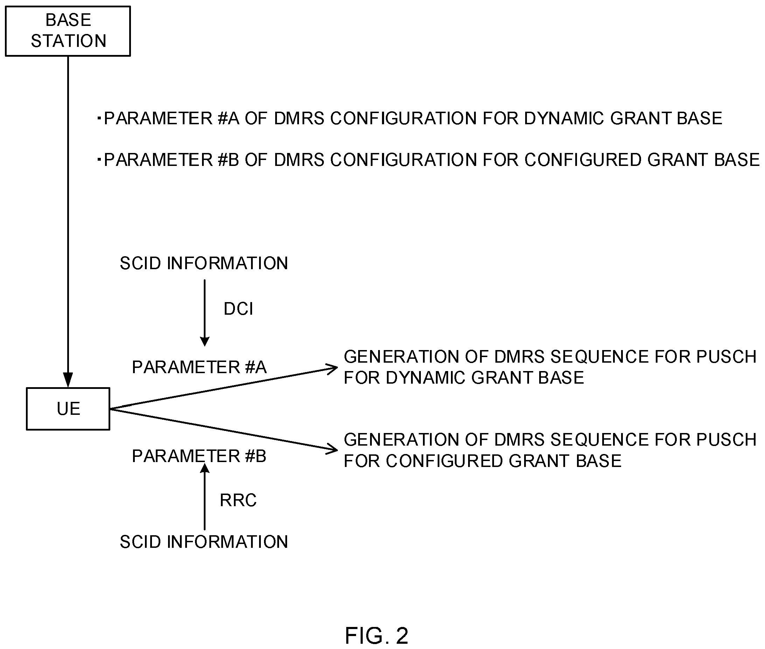

If the PUSCH is a dynamic grant-based PUSCH scheduled by the PDCCH, the base station uses a given DCI (for example, DCI format 0_1 that schedules the PUSCH) to report the value (0 or 1) of the $n_{SCID}$ to the UE. The UE may determine the value of $n_{SCID}$ on the basis of a given bit field (for example, DM-RS initialization field) of the DCI associated with PUSCH transmission (for example, the case of DCI format 0_1) (see Fig. 2).

On the other hand, if the PUSCH is a configured grant PUSCH that is not scheduled by the PDCCH (or DCI), the base station may use the higher layer parameters (for example, dmrs-SeqInitialization) included in a given information element (for example, configuredGrantConfig) to notify the UE of the value of $n_{SCID}$ (0 or 1). The UE may determine the value of $n_{SCID}$ to be applied to the DMRS for configured grant-based PUSCH on the basis of the information reported by the base station by the higher layer (see Fig. 2).

As described above, by setting the notification method of given information (for example, $n_{SCID}$) separately in consideration of the dynamic grant base and the setting grant base transmission methods, it is possible to appropriately generate the DMRS. When the configured grant-based type 2 is used, the $n_{SCID}$ may be reported to the UE by using the DCI that triggers the configured grant-based PUSCH.

<When transform precoding is enabled>

It is assumed that transform precoding is set to enabled (for example, PUSCH transmission based on DFT-s-OFDM is performed). When transform precoding is enabled, the UE may generate the sequence applied to the DMRS by Formula (3) below.

[Equation 3]

$$\text{Formula (3)}$$

$$r\left(n\right) = r_{u,v}^{(\alpha,\delta)}\left(n\right)$$

$$n = 0, 1, ..., M_{sc}^{PUSCH} \Big/ 2^{\delta} - 1$$

$r_{u,v}^{(\alpha,\delta)}(n)$ : Low-PAPR sequence

$M_{sc}^{PUSCH}$ : Bandwidth scheduled for UL transmission (for example, number of subcarriers)

When transform precoding is enabled, the DMRS sequence (for example, r(n)) may be defined using $f_{gh}$ corresponding to group hopping (or parameters of group hopping), a sequence group (u) determined by a given identifier (for example, $n_{ID}^{RS}$), or the like. The sequence group (u) may be defined by Formula (4) below.

[Equation 4]

$$\text{Formula (4)}$$

$$u = \left(f_{gh} + n_{ID}^{RS}\right) \bmod 30$$

$f_{gh}$: Group hopping
$n_{ID}^{RS}$: Given identifier

In Formula (4), $n_{ID}^{RS}$ may be determined by a value reported by higher layer signaling (for example, $n_{ID}^{PUSCH}$). For example, the UE may acquire the value of $n_{ID}^{RS}$ (= $n_{ID}^{PUSCH}$) on the basis of the higher layer parameter (for example, nPUSCH-Identity) reported from the base station by the higher layer signaling. The higher layer parameter may be configured separately for dynamic grant base and setting grant base and reported to the UE.

For example, if the PUSCH is a dynamic grant-based PUSCH scheduled by the PDCCH (or DCI), the UE may acquire $N_{ID}^{PUSCH}$ on the basis of higher layer parameters (for example, nPUSCH-Identity) configured in the first information element (for example, DMRS-UplinkConfig IE).

On the other hand, if the PUSCH is a configured grant-based PUSCH not scheduled by the PDCCH (or DCI), the UE may acquire $N_{ID}^{PUSCH}$ on the basis of higher layer parameters (for example, nPUSCH-Identity) configured in the second information element (for example, cg-DMRS-configuration IE). For the configured PUSCH in which PUSCH is not scheduled by the PDCCH, UL transmission may be performed without grant.

As described above, the DMRS may be generated by configuring higher layer parameters configured separately for different information elements, for the DMRS for the dynamic grant-based PUSCH and the DMRS for the setting grant-based PUSCH. This allows the UE to appropriately generate a sequence of DMRSs for dynamic grant-based PUSCHs and DMRSs for configured grant-based PUSCHs.

<Variations>

In the above description, when the PUSCH is a dynamic grant-based PUSCH scheduled by PDCCH (or DCI), "DMRS-UplinkConfig" is defined as an information element, but the present invention is not limited to this. For example, in consideration of the PUSCH mapping type (type A, type B), the information elements (or higher layer parameters) corresponding to type A and type B for the DMRS for the dynamic grant-based PUSCH may be specified.

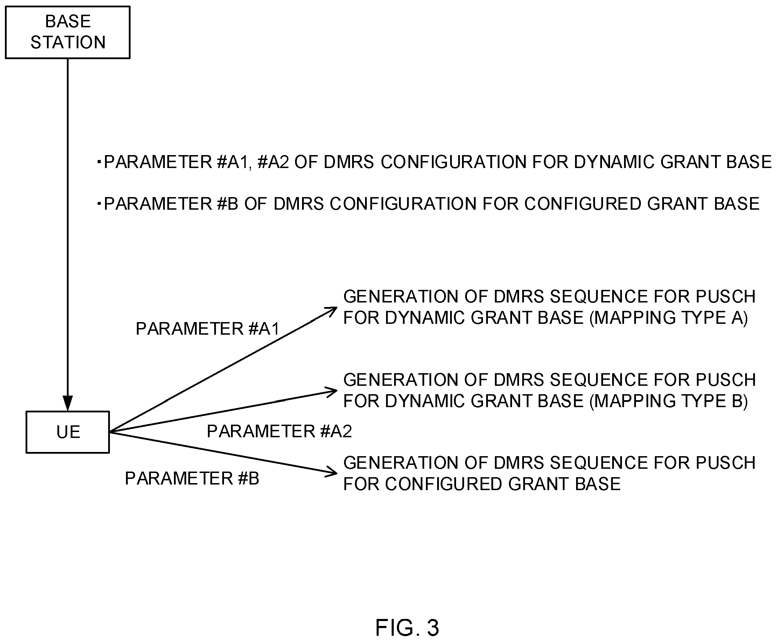

For example, for the DMRS for dynamic grant-based PUSCH, the information elements corresponding to each PUSCH mapping type (for example, "dmrs-UplinkForPUSCH-MappingTypeA" and "dmrs-UplinkForPUSCH-Mapping-TypeB") are specified (see Fig. 3). The UE may generate the DMRS, for the DMRS for dynamic grant-based PUSCH, on the basis of the higher layer parameters configured for each mapping type. In this case, in the above description, "DMRS-UplinkConfig" may be replaced with at least one of "dmrs-UplinkForPUSCH-MappingTypeA" and "dmrs-Uplink-ForPUSCH-MappingTypeB".

(Radio Communication System)

Now, the structure of a radio communication system according to the embodiment of the present disclosure will be described below. In this radio communication system, communication is performed using at least one of or a combination of the radio communication methods described in the embodiments described above.

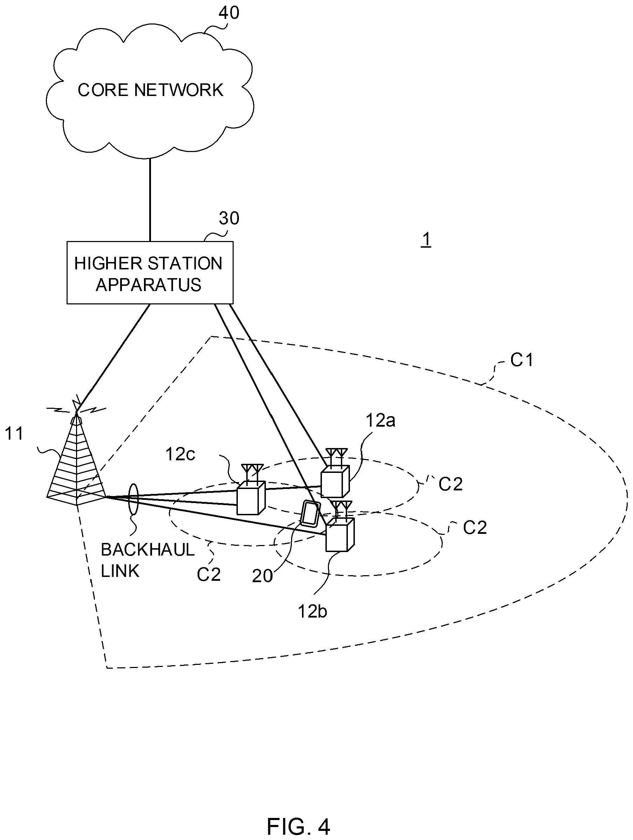

Fig. 4 is a diagram illustrating an example of a schematic configuration of a radio communication system according to an embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)", "LTE-A (LTE-Advanced)", "LTE-B (LTE-Beyond)", "SUPER 3G", "IMT-Advanced", "4G (4th generation mobile communication system)", "5G (5th generation mobile communication system)", "NR (New Radio)", "FRA (Future Radio Access)", "New-RAT (Radio Access Technology)", and the like, or may be seen as a system to implement these.

The radio communication system 1 may support dual connectivity (multi-RAT dual connectivity (MR-DC)) between a plurality of radio access technologies (RATs). The MR-DC may include dual connectivity (E-UTRA-NR Dual Connectivity (EN-DC)) between LTE and NR in which the LTE (E-UTRA) base station (eNB) is a master node (MN), and an NR base station (gNB) is a secondary node (SN), and dual connectivity (NR-E-UTRA Dual Connectivity (NE-DC)) between NR and LTE in which the NR base station (gNB) is MN and the LTE (E-UTRA) base station (eNB) is SN.

The radio communication system 1 includes a base station 11 that forms a macro cell C1 covering a relatively wide coverage, and base stations 12 (12a to 12c) that are placed within the macro cell C1 and that form small cells C2, which are narrower than the macro cell C1. Also, user terminals 20 are placed in the macro cell C1 and in each small cell C2. The arrangement, number, and the like of cells and user terminals 20 are not limited to an aspect shown in the drawings.

The user terminal 20 can connect with both the base station 11 and the base stations 12. It is assumed that the user terminals 20 use the macro cell C1 and the small cells C2 at the same time using CA or DC. Furthermore, the user terminals 20 may apply CA or DC using a plurality of cells (CCs) (for example, five or fewer CCs or six or more CCs) .

Between the user terminal 20 and the base station 11, communication can be carried out using a carrier of a relatively low frequency band (for example, 2 GHz) and a narrow bandwidth (referred to as an "existing carrier", a "legacy carrier", and the like). Meanwhile, between the user terminal 20 and the base stations 12, a carrier of a relatively high frequency band (for example, 3.5 GHz, 5 GHz and the like) and a wide bandwidth may be used, or the same carrier as that used in the base station 11 may be used. Note that the structure of the frequency band for use in each base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain, and the like.

For example, for a certain physical channel, when the subcarrier spacing differs and/or the numbers of OFDM symbols are different between the constituent OFDM symbols, this case may be described that they are different in numerology.

The base station 11 and the base station 12 (or between two base stations 12) may be connected by wire (for example, means in compliance with the common public radio interface (CPRI) such as optical fiber, an X2 interface, and the like) or wirelessly.

The base station 11 and the base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME),and the like, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point", and the like. Also, the base stations 12 are base stations having local coverages, and may be referred to as "small base stations", "micro base stations", "pico base stations", "femto base stations", "HeNBs (Home eNodeBs)", "RRHs (Remote Radio Heads)", "transmission/reception points", and the like. Hereinafter the base stations 11 and 12 will be collectively referred to as "base stations 10", unless specified otherwise.

The user terminals 20 are terminals to support various communication schemes such as LTE, LTE-A, and the like, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels, and the like are used as downlink channels. User data, higher layer control information, SIBs (System Information Blocks), and the like are communicated in the PDSCH. Further, MIB (Master Information Block) is transmitted by PBCH.

The downlink L1/L2 control channels include at least one of a downlink control channel (PDCCH (Physical Downlink Control Channel) and/or an EPDCCH (Enhanced Physical Downlink Control Channel)), a PCFICH (Physical Control Format Indicator channel), and a PHICH (Physical Hybrid-ARQ Indicator Channel). Downlink control information (DCI) including scheduling information of PDSCH and/or PUSCH, or the like is transmitted by PDCCH.

Note that scheduling information may be reported via DCI. For example, the DCI to schedule receipt of DL data may be referred to as "DL assignment", and the DCI to schedule transmission of UL data may be referred to as "UL grant".

The number of OFDM symbols for use in PDCCH is transmitted by PCFICH. HARQ (Hybrid Automatic Repeat reQuest) delivery acknowledgement information (also referred to as, for example, "retransmission control information", "HARQ-ACKs", "ACK/NACKs", etc.) in response to the PUSCH is communicated by the PHICH. The EPDCCH is frequency-division-multiplexed with the PDSCH (downlink shared data channel) and used to communicate DCI and the like, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)), and the like are used as uplink channels. User data, higher layer control information, and the like are communicated by the PUSCH. Also, in the PUCCH, downlink radio link quality information (CQI (Channel Quality Indicator)), delivery acknowledgement information, scheduling requests (SRs), and the like are communicated. By means of PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs), and the like are communicated as downlink reference signals. Also, in the radio communication system 1, measurement reference signals (SRSs (Sounding Reference Signals)), demodulation reference signals (DMRSs), and the like are communicated as uplink reference signals. Note that, DMRSs may be referred to as "user terminal-specific reference signals (UE-specific Reference Signals)". Also, the reference signals to be communicated are by no means limited to these.

<Base Station>

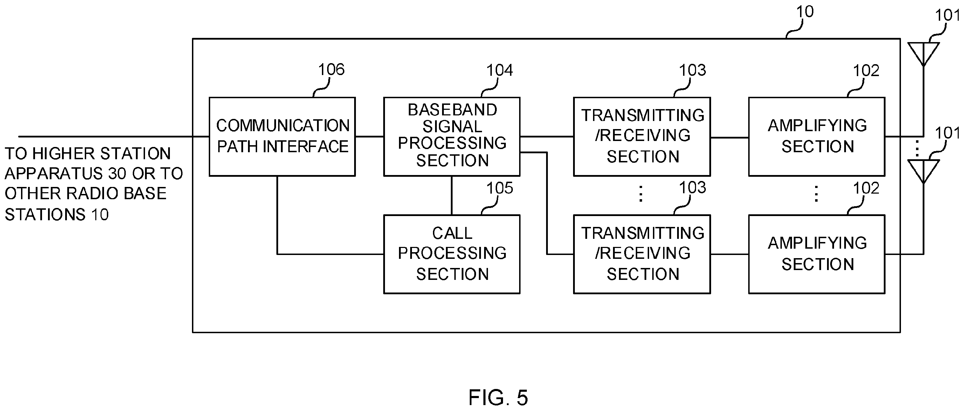

Fig. 5 is a diagram showing an example of an overall configuration of a base station according to one embodiment. A base station 10 has a plurality of transmitting/receiving antennas 101, amplifying sections 102, transmitting/receiving sections 103, a baseband signal processing section 104, a call processing section 105, and a communication path interface 106. Note that one or more transmitting/receiving antennas 101, amplifying sections 102, and transmitting/receiving sections 103 may be provided.

User data to be transmitted from the base station 10 to the user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are pre-coded and output from the baseband signal processing section 104 on a per antenna basis are converted into a radio frequency band in the transmitting/receiving sections 103, and then transmitted. A radio frequency signal subjected to the frequency conversion in each transmitting/receiving section 103 is amplified in the amplifying section 102, and transmitted from each transmitting/receiving antenna 101. The transmitting/receiving section 103 can be constituted by a transmitters/receiver, a transmitting/receiving circuit or transmitting/receiving apparatus that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing) of communication channels, manages the state of the base stations 10 and manages the radio resources.

The communication path interface 106 transmits and receives signals to and from the higher station apparatus 30 via a predetermined interface. Also, the communication path interface 106 may transmit and receive signals (backhaul signaling) with other base stations 10 via an inter-base station interface (which is, for example, optical fiber that is in compliance with the CPRI (Common Public Radio Interface), the X2 interface).

Note that the transmitting/receiving section 103 may further include an analog beamforming section that performs analog beamforming. The analog beamforming section can be constituted by an analog beamforming circuit (for example, a phase shifter, a phase shift circuit) or analog beamforming apparatus (e.g., a phase shifter) described based on general understanding of the technical field to which the present disclosure pertains. Also, the transmitting/receiving antenna 101 can be constituted by an array antenna, for example. Also, the transmitting/receiving section 103 may be configured such that that single BF, multi BF, and the like can be used.

The transmitting/receiving section 103 may transmit a signal using a transmission beam and may receive a signal using a reception beam. The transmitting/receiving section 103 may transmit and/or receive a signal using a given beam determined by the control section 301.

The transmitting/receiving section 103 may receive and/or transmit various types of information described in the above-described embodiments from/to the user terminal 20. For example, the transmitting/receiving section 103 receives a first demodulation reference signal (DMRS) for demodulating the first uplink shared channel scheduled by the downlink control information and a second DMRS for demodulating the second uplink shared channel that is not scheduled by the downlink control information.

The transmitting/receiving section 103 may transmit a higher layer parameter (or information element) used for generating the first DMRS sequence and a higher layer parameter (or information element) used for generating the second DMRS sequence to the UE separately.

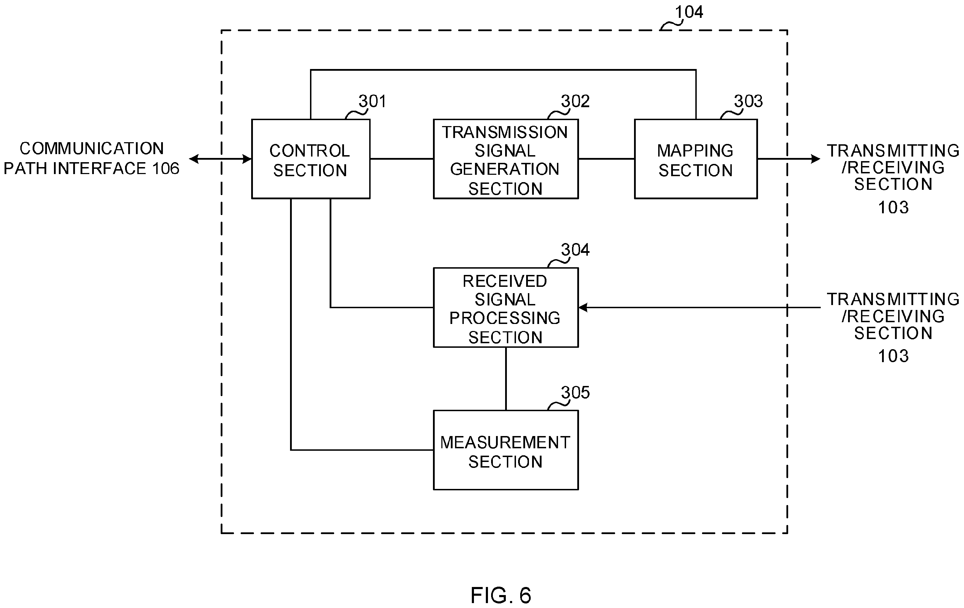

Fig. 6 is a diagram showing an example of a functional configuration of the base station according to one embodiment. Note that, although this example will primarily show functional blocks that pertain to characteristic parts of the present embodiment, it may be assumed that the base station 10 has other functional blocks that are necessary for radio communication as well.

The baseband signal processing section 104 at least has a control section (scheduler) 301, a transmission signal generation section 302, a mapping section 303, a received signal processing section 304, and a measurement section 305. Note that these configurations have only to be included in the base station 10, and some or all of these configurations may not be included in the baseband signal processing section 104.

The control section (scheduler) 301 controls the whole of the base station 10. The control section 301 can be constituted by a controller, a control circuit or control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processing in the received signal processing section 304, the measurements of signals in the measurement section 305, and the like.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, and delivery acknowledgement information). The control section 301 controls the generation of downlink control signals, downlink data signals and the like, based on the results of deciding whether or not retransmission control is necessary for uplink data signals, and the like.

The control section 301 may configure a higher layer parameter (or information element) used for generating the first DMRS sequence for dynamic grant base and a higher layer parameter (or information element) used for generating the second DMRS sequence for configured grant base to the UE separately.

The control section 301 may use digital BF (for example, precoding) by the baseband signal processing section 104 and/or analog BF (for example, phase rotation) by the transmitting/receiving sections 103 to form a transmission beam and/or a reception beam.

The transmission signal generation section 302 generates downlink signals (downlink control signals, downlink data signals, downlink reference signals, and the like) based on commands from the control section 301, and outputs these signals to the mapping section 303. The transmission signal generation section 302 can be constituted by a signal generator, a signal generating circuit, or signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Also, the downlink data signals are subjected to the coding processing, the modulation processing, and the like, by using coding rates and modulation schemes that are determined based on, for example, channel state information (CSI) reported from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding, and the like) of received signals that are input from the transmitting/receiving sections 103. Here, the received signals include, for example, uplink signals transmitted from the user terminals 20 (uplink control signals, uplink data signals, uplink reference signals, etc.). The received signal processing section 304 can be constituted by a signal processor, a signal processing circuit, or signal processing apparatus that can be described based on general understanding of the technical field to which the present disclosure pertains.

The received signal processing section 304 outputs, to the control section 301, information decoded by the receiving processing. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit, or measurement apparatus that can be described based on general understanding of the technical field to which the present disclosure pertains.

For example, the measurement section 305 may perform RRM (Radio Resource Management) measurements, CSI (Channel State Information) measurements, and the like, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), transmission path information (for example, CSI), and the like. The measurement results may be output to the control section 301.

\<User Terminal\>

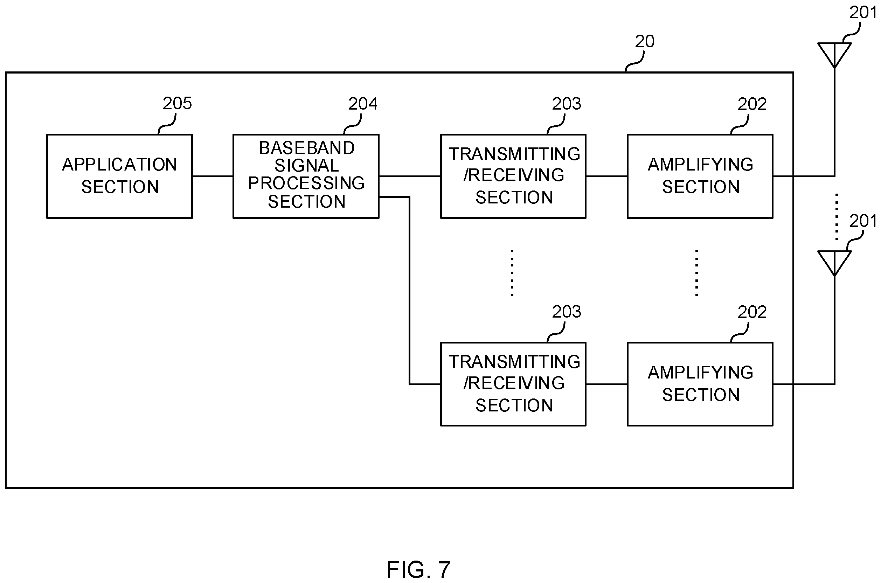

Fig. 7 is a diagram showing an example of an overall structure of a user terminal according to an embodiment. A user terminal 20 has a plurality of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving section 203 can be constituted by a transmitters/receiver, a transmitting/receiving circuit, or transmitting/receiving apparatus that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process, and the like. Downlink user data is forwarded to the application section 205. The application section 205 performs processes related to higher layers above the physical layer and the MAC layer, and the like. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process, and the like, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beamforming section that performs analog beamforming. The analog beamforming section can be constituted by an analog beamforming circuit (for example, a phase shifter, a phase shift circuit) or analog beamforming apparatus (e.g., a phase shifter) described based on general understanding of the technical field to which the present disclosure pertains. Also, the transmitting/receiving antenna 201 can be constituted by an array antenna, for example. Also, the transmitting/receiving section 203 is configured such that that single BF and multi BF can be used.

The transmitting/receiving section 203 may transmit a first demodulation reference signal (DMRS) for demodulating the first uplink shared channel scheduled by the downlink control information and a second DMRS for demodulating the second uplink shared channel that is not scheduled by the downlink control information. The transmitting/receiving section 203 may receive a higher layer parameter (or information element) used for generating the first DMRS sequence for dynamic grant base and a higher layer parameter (or information element) used for generating the second DMRS sequence for configured grant base to the UE separately.

The transmitting/receiving section 203 may separately receive the information related to the scrambling ID corresponding to the first DMRS (for example, $n_{SCID}$) and the information related to the scrambling ID corresponding to the second DMRS. The transmitting/receiving section 203 may receive information for specifying the scramble ID number corresponding to the first DMRS by downlink control information, and receive information for specifying the scramble ID number corresponding to the second DMRS by higher layer signaling.

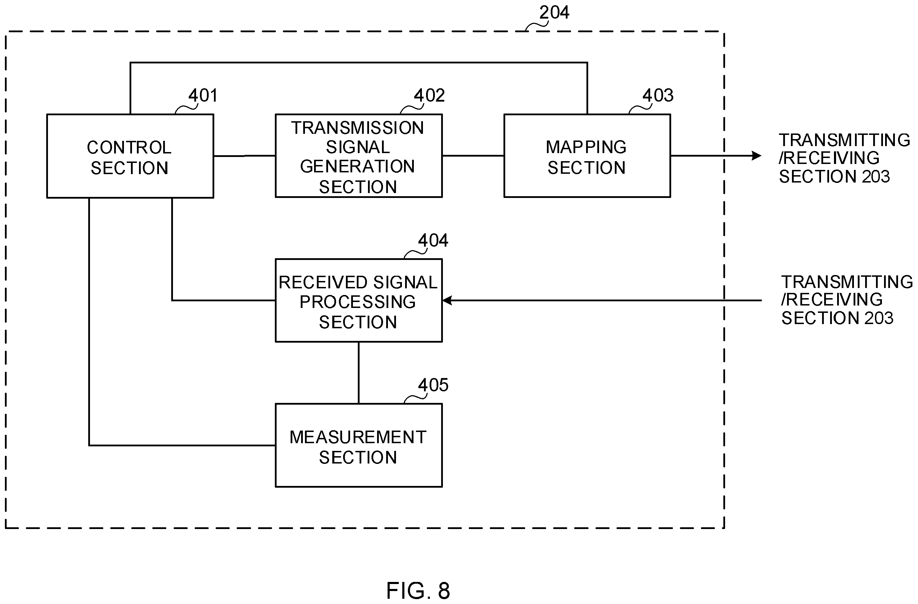

Fig. 8 is a diagram showing an example of a functional structure of a user terminal according to an embodiment. Note that, although this example will primarily show functional blocks that pertain to characteristic parts of the present embodiment, it may be assumed that the user terminal 20 have other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit, or control apparatus that can be described based on general understanding of the technical field to which the present disclosure pertains.

The control section 401, for example, controls the generation of signals in the transmission signal generation section 402, the allocation of signals in the mapping section 403, and the like. Furthermore, the control section 401 controls the signal receiving processing in the received signal processing section 404, the measurements of signals in the measurement section 405, and the like.

The control section 401 acquires the downlink control signals and downlink data signals transmitted from the base station 10, via the received signal processing section 404. The control section 401 controls the generation of uplink control signals and/or uplink data signals based on the results of deciding whether or not retransmission control is necessary for the downlink control signals and/or downlink data signals, and the like.

The control section 401 may use digital BF (for example, precoding) by the baseband signal processing section 204 and/or analog BF (for example, phase rotation) by the transmitting/receiving sections 203 to form a transmission beam and/or a reception beam.

The control section 401 may control the generation of the first DMRS sequence for the dynamic grant base and the second DMRS sequence for the configured grant base on the basis of the higher layer parameters configured separately.

The control section 401 may generate the first DMRS sequence on the basis of the information separately reported by the higher layer signaling for the plurality of mapping types configured in the first uplink shared channel.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or signal generation apparatus that can be described based on general understanding of the technical field to which the present disclosure pertains.

For example, the transmission signal generation section 402 generates uplink control signals such as delivery acknowledgement information, channel state information (CSI), and the like, based on commands from the control section 401. Also, the transmission signal generation section 402 generates uplink data signals based on commands from the control section 401. For example, when a UL grant is included in a downlink control signal that is reported from the base station 10, the control section 401 instructs the transmission signal generation section 402 to generate an uplink data signal.

The mapping section 403 maps the uplink signals generated in the transmission signal generation section 402 to radio resources based on commands from the control section 401, and output the result to the transmitting/receiving section 203. The mapping section 403 can be constituted by a mapper, a mapping circuit, or mapping apparatus that can be described based on general understanding of the technical field to which the present disclosure pertains.

The received signal processing section 404 performs receiving processes (for example, demapping, demodulation, decoding, and the like) of received signals that are input from the transmitting/receiving sections 203. Here, the received signals include, for example, downlink signals (downlink control signals, downlink data signals, downlink reference signals, and the like) that are transmitted from the base station 10. The received signal processing section 404 can be constituted by a signal processor, a signal processing circuit, or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processing to the control section 401. The received signal processing section 404 outputs, for example, broadcast information, system information, RRC signaling, DCI, and the like, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit, or measurement apparatus that can be described based on general understanding of the technical field to which the present disclosure pertains.

For example, the measurement section 405 may perform RRM measurements, CSI measurements, and the like based on the received signals. The measurement section 405 may measure the received power (for example, RSRP), the received quality (for example, RSRQ, SINR, SNR, etc.), the signal strength (for example, RSSI), transmission path information (for example, CSI), and the like. The measurement results may be output to the control section 401.

The transmitting/receiving section 203 may transmit BFRQ, PBFRQ, or the like to the base station 10.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses. The functional block may be realized by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, and deeming, broadcasting, notifying, communicating, forwarding, configuring, reconfiguring, allocating, mapping, and assigning. For example, a functional block (configuration unit) that causes transmission to function may be referred to as a transmitting unit/section, a transmitter, or the like. In any case, as described above, the implementation method is not particularly limited.

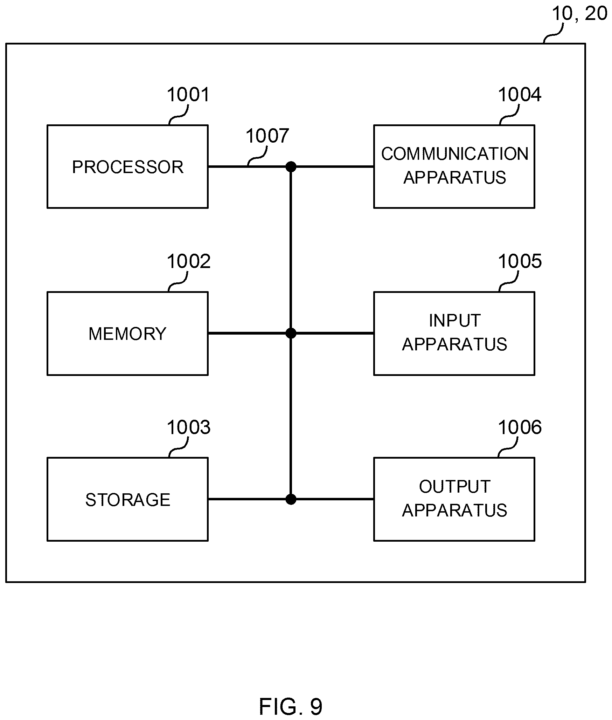

For example, the base station, the user terminal, and the like according to one embodiment of the present disclosure may function as a computer that executes the processing of the radio communication method of the present disclosure. Fig. 9 is a diagram showing an example of a hardware structure of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, and a bus 1007.

Note that, in the following description, the word "apparatus" may be replaced by "circuit", "device", "unit", and the like. The hardware structure of the base station 10 and the user terminal 20 may be designed to include one or more of each apparatus shown in the drawings, or may be designed not to include some apparatuses.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the base station 10 and the user terminal 20 is implemented by reading predetermined software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with a peripheral equipment, a control apparatus, a computing apparatus, a register, and the like. For example, the above-described baseband signal processing section 104 (204), call processing section 105, and the like may be implemented by the processor 1001.

Furthermore, the processor 1001 reads programs (program codes), software modules, or data, from at least one of the storage 1003 and the communication apparatus 1004, into the memory 1002, and executes various processing according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and/or other appropriate storage media. The memory 1002 may be referred to as a "register", a "cache", a "main memory (primary storage apparatus)", and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and the like), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus".

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer, and the like in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and the like may be implemented by the communication apparatus 1004. The transmitting/receiving section 103 may be implemented by physically or logically separating a transmitting section 103a and a receiving section 103b.

The input apparatus 1005 is an input device for receiving input from the outside (for example, a keyboard, a mouse, a microphone, a switch, a button, a sensor, and the like). The output apparatus 1006 is an output device for allowing sending output to the outside (for example, a display, a speaker, an LED (Light Emitting Diode) lamp, and the like). Note that the input apparatus 1005 and the output apparatus 1006 may be provided in an integrated structure (for example, a touch panel).

Furthermore, these pieces of apparatus, including the processor 1001, the memory 1002, and the like are connected by the bus 1007 so as to communicate information. The bus 1007 may be formed with a single bus, or may be formed with buses that vary between pieces of apparatus.

Also, the base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array), and the like, and part or all of the functional blocks may be implemented by the hardware. For example, the processor 1001 may be implemented with at least one of these pieces of hardware.

(Variations)

Note that the terminology used in the present disclosure and the terminology that is needed to understand the present disclosure may be replaced by other terms that convey the same or similar meanings. For example, "channels" and "symbols" may be replaced by "signals" (or "signaling"). Also, "signals" may be replaced by "messages". A reference signal may be abbreviated as an "RS", and may be referred to as a "pilot", a "pilot signal" and the like, depending on which standard applies. Furthermore, a "component carrier (CC)" may be referred to as a "cell", a "frequency carrier", a "carrier frequency", and the like.

A radio frame may be comprised of one or more periods (frames) in the time domain. Each of one or more periods (frames) constituting a radio frame may be referred to as a "subframe". Furthermore, a subframe may be comprised of one or multiple slots in the time domain. A subframe may be a fixed time duration (for example, 1 ms) that is not dependent on numerology.

Here, the numerology may be a communication parameter used for at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and the like.

A slot may be comprised of one or more symbols in the time domain (OFDM (Orthogonal Frequency Division Multiplexing) symbols, SC-FDMA (Single Carrier Frequency Division Multiple Access) symbols, and the like). Also, a slot may be a time unit based on numerology.

A slot may include a plurality of mini slots. Each mini slot may be comprised of one or more symbols in the time domain. Also, a mini slot may be referred to as a "subslot". Each mini slot may be comprised of fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

A radio frame, a subframe, a slot, a mini slot, and a symbol all represent the time unit in signal communication. A radio frame, a subframe, a slot, a mini slot, and a symbol may be each called by other applicable names. Note that time units such as a frame, a subframe, a slot, a mini slot, and a symbol in the present disclosure may be replaced with each other.

For example, one subframe may be referred to as a "transmission time interval (TTI)", or a plurality of consecutive subframes may be referred to as a "TTI", or one slot or one mini slot may be referred to as a "TTI". That is, at least one of a subframe and a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot", a "mini slot", and the like, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and the like, or may be the unit of processing in scheduling, link adaptation, and the like. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

TTI having a time length of 1 ms may be called usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one mini slot, one subframe, or one TTI in length. One TTI, one subframe, and the like each may be comprised of one or more resource blocks.

Note that one or more RBs may be referred to as a "physical resource block (PRB (Physical RB))", a "subcarrier group (SCG)", a "resource element group (REG)", a "PRB pair", an "RB pair", and the like.

Furthermore, a resource block may be comprised of one or more resource elements (REs). For example, one RE may be a radio resource field of one subcarrier and one symbol.

The bandwidth part (BWP) (which may be called partial bandwidth etc.) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE may not assume to transmit or receive a predetermined signal/channel outside the active BWP. Note that "cell", "carrier", and the like in the present disclosure may be read as "BWP".

Note that the structures of radio frames, subframes, slots, mini slots, symbols, and the like described above are merely examples. For example, configurations pertaining to the number of subframes included in a radio frame, the number of slots included in a subframe, the number of mini-slots included in a slot, the number of symbols and RBs included in a slot or a mini slot, the number of subcarriers included in an RB, the number of symbols in a TTI, the symbol duration, the length of cyclic prefixes (CPs), and the like can be variously changed.

Also, the information and parameters described in the present disclosure may be represented in absolute values or in relative values with respect to predetermined values, or may be represented using other applicable information. For example, a radio resource may be specified by a predetermined index.

The names used for parameters and the like in the present disclosure are in no respect limiting. In addition, an equation and the like using these parameters may differ from those explicitly disclosed in the present disclosure. Since various channels (PUCCH (Physical Uplink Control Channel), PDCCH (Physical Downlink Control Channel) and the like) and information elements can be identified by any suitable names, the various names assigned to these individual channels and information elements are in no respect limiting.

The information, signals, and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals, and the like may be input and output via a plurality of network nodes.

The information, signals, and the like that are input and/or output may be stored in a specific location (for example, in a memory), or may be managed in a control table. The information, signals, and the like to be input and/or output can be overwritten, updated or appended. The information, signals, and the like that are output may be deleted. The information, signals, and the like that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs), and the like), MAC (Medium Access Control) signaling), other signals, or combinations of these.

Note that physical layer signaling may be referred to as "L1/L2 (Layer 1/Layer 2) control information (L1/L2 control signals)", "L1 control information (L1 control signal)", and the like. Also, RRC signaling may be referred to as "RRC messages", and can be, for example, an RRC connection setup (RRCConnectionSetup) message, RRC connection reconfiguration (RRCConnectionReconfiguration) message, and the like. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (for example, by not reporting this piece of information, by reporting another piece of information, and the like).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and the like.

Also, software, commands, information, and the like may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms such as "precoding", "precoder", "weight (precoding weight)", "quasi-co-location (QCL)", "transmission power", "phase rotation", "antenna port", "antenna port group", "layer", " "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station and a mobile station may be referred to as transmitting apparatus, receiving apparatus, communication apparatus, and the like. Note that at least one of the base station and the mobile station may be a device mounted on a mobile unit, a mobile unit itself, or the like. The moving body may be a transportation (for example, a car, an airplane and the like), an unmanned moving body (for example, a drone, an autonomous car and the like), or a (manned or unmanned) robot. Note that at least one of the base station and the mobile station also includes a device that does not necessarily move during a communication operation. For example, at least one of the base station and the mobile station may be an IoT (Internet of Things) device such as a sensor.

Furthermore, the base stations in the present disclosure may be read as the user terminal. For example, each aspect/embodiment of the present disclosure may be applied to a structure in which communication between the base station and the user terminal is replaced by communication among a plurality of user terminal (which may be referred to as, for example, D2D (Device-to-Device), V2X (Vehicle-to-Everything), and the like). In this case, the user terminal 20 may have the functions of the base station 10 described above. In addition, the wording such as "up" and "down" may be replaced with the wording corresponding to the terminal-to-terminal communication (for example, "side"). For example, an uplink channel, and a downlink channel may be interpreted as a side channel.

Likewise, the user terminal in the present disclosure may be interpreted as the base station. In this case, the base station 10 may have the functions of the user terminal 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and the like may be possible, but these are not limiting) other than base stations, or combinations of these.

The aspects/embodiments shown in the present disclosure may be used individually or in combinations, which may be switched depending on the mode of implementation. The order of processes, sequences, flowcharts, and the like that have been used to describe the aspects/embodiments in the present disclosure may be re-ordered as long as inconsistencies do not arise. For example, although various methods have been shown in the present disclosure with various components of steps using exemplary orders, the specific orders that are shown herein are by no means limiting.

The aspects/embodiments shown in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, and/or next generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on".

Reference to elements with designations such as "first", "second", and the like as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, "determining" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and the like.

In addition, to "judge" and "determine" as used herein may be interpreted to mean making judgements and determinations related to resolving, selecting, choosing, establishing, comparing, and the like. In other words, to "judge" and "determine" as used herein may be interpreted to mean making judgements and determinations related to some action.

In addition, to "judge" and "determine" as used herein may be interpreted to mean "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other". Note that the term may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive disjunction.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A user terminal comprising:

    a transmitting section that transmits a first demodulation reference signal (DMRS) for demodulating a first uplink shared channel scheduled by downlink control information and a second DMRS for demodulating a second uplink shared channel that is not scheduled by the downlink control information; and
    a control section that controls generation of a sequence of the first DMRS and a sequence of the second DMRS based on higher layer parameters configured separately.

2. The user terminal according to claim 1 further comprising a receiving section that separately receives information related to a scrambling ID corresponding to the first DMRS and information related to a scrambling ID corresponding to the second DMRS.

3. The user terminal according to any one of claims 1 and 2, wherein the receiving section receives information for specifying a scramble ID number corresponding to the first DMRS by downlink control information, and receives information for specifying a scramble ID number corresponding to the second DMRS by higher layer signaling.

4. The user terminal according to any one of claims 1 to 3, wherein the control section generates a sequence of the first DMRS based on information separately reported by the higher layer signaling for a plurality of mapping types configured in the first uplink shared channel.

5. A radio communication method for a user terminal, comprising:

    transmitting a first demodulation reference signal (DMRS) for demodulating a first uplink shared channel scheduled by downlink control information and a second DMRS for demodulating a second uplink shared channel that is not scheduled by the downlink control information; and
    controlling generation of a sequence of the first DMRS and a sequence of the second DMRS based on higher layer parameters configured separately.

BASE
STATION

·PARAMETER #A OF DMRS CONFIGURATION FOR DYNAMIC GRANT BASE

·PARAMETER #B OF DMRS CONFIGURATION FOR CONFIGURED GRANT BASE

PARAMETER #A    GENERATION OF DMRS SEQUENCE FOR PUSCH
                FOR DYNAMIC GRANT BASE

UE

PARAMETER #B    GENERATION OF DMRS SEQUENCE FOR PUSCH
                FOR CONFIGURED GRANT BASE

FIG. 1

EP 3 836 662 A1

BASE
STATION

·PARAMETER #A OF DMRS CONFIGURATION FOR DYNAMIC GRANT BASE

·PARAMETER #B OF DMRS CONFIGURATION FOR CONFIGURED GRANT BASE

SCID INFORMATION

DCI

PARAMETER #A → GENERATION OF DMRS SEQUENCE FOR PUSCH
FOR DYNAMIC GRANT BASE

UE

GENERATION OF DMRS SEQUENCE FOR PUSCH
PARAMETER #B → FOR CONFIGURED GRANT BASE

RRC

SCID INFORMATION

FIG. 2

EP 3 836 662 A1

BASE
STATION

·PARAMETER #A1, #A2 OF DMRS CONFIGURATION FOR DYNAMIC GRANT BASE

·PARAMETER #B OF DMRS CONFIGURATION FOR CONFIGURED GRANT BASE

GENERATION OF DMRS SEQUENCE FOR PUSCH
FOR DYNAMIC GRANT BASE (MAPPING TYPE A)

PARAMETER #A1

GENERATION OF DMRS SEQUENCE FOR PUSCH
FOR DYNAMIC GRANT BASE (MAPPING TYPE B)

UE          PARAMETER #A2

GENERATION OF DMRS SEQUENCE FOR PUSCH
PARAMETER #B    FOR CONFIGURED GRANT BASE

FIG. 3

FIG. 4

FIG. 5

FIG. 6

104

301 CONTROL SECTION

302 TRANSMISSION SIGNAL GENERATION SECTION

303 MAPPING SECTION

304 RECEIVED SIGNAL PROCESSING SECTION

305 MEASUREMENT SECTION

TRANSMITTING /RECEIVING SECTION 103

TRANSMITTING /RECEIVING SECTION 103

COMMUNICATION PATH INTERFACE 106

FIG. 7

EP 3 836 662 A1

FIG. 8

10, 20

1001

PROCESSOR

1007

COMMUNICATION
APPARATUS

1004

1002

MEMORY

INPUT
APPARATUS

1005

1003

STORAGE

OUTPUT
APPARATUS

1006

FIG. 9

## INTERNATIONAL SEARCH REPORT

| International application No. |
| --- |
| PCT/JP2018/030147 |

### A. CLASSIFICATION OF SUBJECT MATTER
Int. Cl. H04W72/04(2009.01)i

According to International Patent Classification (IPC) or to both national classification and IPC

### B. FIELDS SEARCHED

Minimum documentation searched (classification system followed by classification symbols)
Int. Cl. H04B7/24-7/26, H04W4/00-99/00

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | LG Electronics, Discussion on configured grant for NR unlicensed operation, 3GPP TSG RAN WG1 Meeting #93 R1-1806648, 25 May 2018, section 2.1 | 1-5 |
| Y | Qualcomm, Finalizing PDSCH/PUSCH's DM-RS for NR Rel-15, 3GPP TSG RAN WG1 Meeting #93 R1-1807691, 25 May 2018, section 1.3, 1.7 | 1-5 |
| Y | Huawei, HiSilicon, Transmission with configured grant in NR unlicensed band, 3GPP TSG RAN WG1 Meeting #93 R1-1805922, 25 May 2018, section 2.1 | 1-5 |
| A | Qualcomm Incorporated, Enhancement to configured grants in NR unlicensed, 3GPP TSG RAN WG1 Meeting #93 R1-1807392, 25 May 2018, section 2.1 | 1-5 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03.10.2018 | 16.10.2018 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2018/030147 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-219895 A (NTT DOCOMO INC.) 22 December 2016, entire text & EP 3297357 A1 | 1-5 |
| A | JP 2016-518035 A (SHARP CORP.) 20 June 2016, entire text & US 2014/0293881 A1 | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010